(19) Europäisches Patentamt
European Patent Office
Office européen des brevets

(11) Veröffentlichungsnummer: **0 072 054**
**A1**

(12) # EUROPÄISCHE PATENTANMELDUNG

(21) Anmeldenummer: 82200860.3

(22) Anmeldetag: 09.07.82

(51) Int. Cl.[3]: C 01 B 33/28, B 01 J 29/28

(30) Priorität: 11.08.81 DE 3131648

(43) Veröffentlichungstag der Anmeldung: 16.02.83 Patentblatt 83/7

(84) Benannte Vertragsstaaten: AT BE CH DE FR GB IT LI LU NL SE

(71) Anmelder: CHEMISCHE WERKE HÜLS AG,
Postfach 1320, D-4370 Marl 1 (DE)

(72) Erfinder: Bohres, Eberhard, Dr., Borkumstrasse 47, D-4350 Recklinghausen (DE)
Erfinder: Peterlein, Karl, Dr., Vehrenbergstrasse 109, D-4390 Gladbeck (DE)

(74) Vertreter: Steil, Hanna, Dipl.-Chem., RSP PATENTE - PB 15 Postfach 1320, D-4370 Marl 1 (DE)

(54) **Verfahren zur Herstellung von kristallinen Metallsilikaten sowie deren Anwendung.**

(57) Die Erfindung betrifft ein Verfahren zur Herstellung von kristallinen Metallsilikaten mit Hilfe spezieller Polyamine als Schablonenverbindungen. Die erfindungsgemäss hergestellten Metallsilikate eignen sich als Katalysatoren für die Umwandlung von organischen Verbindungen in Kohlenwasserstoffe.

EP 0 072 054 A1

## Verfahren zur Herstellung von kristallinen Metallsilikaten sowie deren Anwendung

Die Erfindung bezieht sich auf ein neues Herstellungsverfahren für kristalline Metallsilikate sowie deren Anwendung als Katalysator für die Umwandlung von gegebenenfalls sauerstoffhaltigen, organischen Verbindungen in Kohlenwasserstoffe. Außerdem stellen diese erfindungsgemäß hergestellten kristallinen Metallsilikate adsorbierende und extrahierende Mittel dar. Ferner können diese erfindungsgemäß hergestellten kristallinen Metallsilikate auch als Katalysatorträger sowie als Trocknungsmittel und Ionenaustauscher eingesetzt werden.

Spezielle Metallsilikate mit großem $SiO_2$/Metalloxid - Molverhältnis und mit hoher Formselektivität werden im allgemeinen unter Zusatz von sogenannten Schablonenverbindungen hergestellt, insbesondere unter Zusatz von Tetraalkylammoniumhydroxiden oder -halogeniden, z.B. gemäß DE-OS 17 67 235 und DE-OS 28 48 849.

Diese Verbindungen sind teuer und müssen in verhältnismäßig großer Menge zugegeben werden, so daß die Herstellung der Katalysatoren kostspielig wird. Halogenhaltige Verbindungen können außerdem Korrosionserscheinungen herbeiführen.

Werden statt quarternärer Stickstoffverbindungen Alkylamine oder Alkyldiamine oder andere Schablonenverbindungen benutzt, z.B. gemäß DE-OS 28 17 576 und DE-OS 28 31 611, kann die Aktivität oder Lebensdauer der Katalysatoren erheblich beeinträchtigt werden.

Schließlich ist es auch bekannt, Polyamine für die Herstellung von Aluminiumsilikaten mit höherem $SiO_2/Al_2O_3$-Molverhältnis einzusetzen (vgl. EP-A 0009976). In diesem Fall erhält man jedoch amorphe Produkte, die besonders für die Zersetzung von Methanol zu Synthesegas geeignet sind.

Aufgabe der vorliegenden Erfindung war es, ein Verfahren zur Herstellung kristalliner, katalytisch aktiver Metallsilikate mittels leicht zugänglicher, preiswerter und halogenfreier Schblonenverbindungen zu entwickeln, wobei die so hergestellten Metallsilikate zur Umwandlung von gegebenenfalls sauerstoffhaltigen Verbindungen in Kohlenwasserstoffe, insbesondere Aromaten, geeignet sein sollen.

Es wurde nun gefunden, daß man kristalline Metallsilikate mit hohem $SiO_2$/Metalloxid-Molverhältnis mit großer katalytischer Aktivität erhält, wenn man als Schablonenverbindung Polyamine mit mehr als 2 N-Atomen unter Einhaltung bestimmter Bedingungen verwendet.

Gegenstand der Erfindung ist daher ein Verfahren zur Herstellung von kristallinen Metallsilikaten, das darin besteht, daß man eine wäßrige , alkalische Lösung, die eine Metallkomponente in Form von Oxiden, Hydroxiden, Salzen, organischen Metall-Verbindungen, eine Siliciumkomponente in Form von Oxiden, Gelen, Siliciumhydrosolen, Wasserglas, Kieselsäuren und organischen Siliciumverbindungen und gegebenenfalls Alkaliverbindungen enthält, unter Rühren bei erhöhter Temperatur in Gegenwart von Schablonenverbindungen umsetzt, anschließend den auskristallisierten Feststoff abtrennt, trocknet und calciniert, welches dadurch gekennzeichnet ist, daß als Schablonenverbindungen lineare und verzweigte Polyamine mit mehr als 2 N-Atomen der allgemeinen Formel

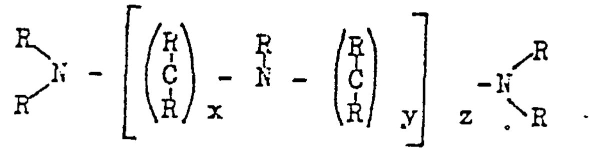

worin die Reste R in beliebiger Weise aus der Gruppe Wasserstoff, $C_1$ - $C_{10}$-Alkyl und -Cycloalkyl kombiniert werden können und x, y und z Zahlen von 1 - 10 bedeuten,

verwendet werden und diese mit der Metall-Silikat-Ansatzlösung innig vermischt, 5 - 100 Tage, insbesondere 5 - 14 Tage, bei 80 - 220 °C, insbesondere 100 bis 180 °C, gerührt, der auskristallisierte Feststoff getrocknet und bei Temperaturen von 500 - 600 °C calciniert, anschließend gegebenenfalls einem Ionenaustausch unterworfen und nochmals calciniert wird.

Die Kristallisation kann gegebenenfalls auch gefördert werden durch Animpfen mit erfindungsgemäß hergestellten kristallinen Metallsilikaten.

Ein weiterer Gegenstand der Erfindung ist die Verwendung der erfindungsgemäß hergestellten kristallinen Metallsilikate zur Umwandlung gegebenenfalls sauerstoffhaltiger Verbindungen wie Methanol in Kohlenwasserstoffe.

Bei der Synthese der erfindungsgemäß hergestellten kristallinen Metallsilikate geht man von Metall-, und Siliciumkomponenten und gegebenenfalls Alkaliverbindungen aus, die in Gegenwart von Polyaminverbindungen, wie vorher erwähnt, bei erhöhter Temperatur kristallisieren.

Die erfindungsgemäß hergestellten kristallinen Metallsilikate können aus Komponenten hergestellt werden, die das entsprechende Element enthalten. Als Metallkomponente kann man u.a. einsetzen das Metall, Oxide bzw. Hydroxide, Metallate, Metallsalze oder auch organische Metallverbindungen. Als Siliciumkomponente kann man u.a. verwenden Siliciumoxide in jeder Form, Wasserglas, Siliciumhydrosole, Siliciumgele, pyrogene Kieselsäuren und

organische Siliciumverbindungen wie z.B. Tetraalkylorthosilikate. Natürlich können auch Kombinationen der oben angeführten Verbindungen eingesetzt werden, und sie können in jeder Reihenfolge zusammengegeben werden. Als mineralisierende Mittel können gegebenenfalls u.a. Alkali- und Erdalkalihydroxide, die entsprechenden Halogenide, Sulfate, Nitrate, Acetate usw. dienen. Bei der Herstellung der erfindungsgemäß hergestellten Metallsilikate ist zu beachten, daß mit der Siliciumkomponente metallhaltige Verunreinigungen zusätzlich eingebracht werden können.

Erfindungsgemäß eignen sich die Metalle der Gruppen Ib, IIb, IIIb, Va, VI a, VIIa und VIII des Periodensystems, wie z.B. Kupfer, Zink, Bor, Aluminium, Vanadium, Chrom, Mangan, Eisen, Kobalt, Nickel, Rhodium, Palladium und Platin.

Das Reaktionsgemisch wird bei einer Temperatur von 80 bis 220 °C gehalten, bevorzugt ist eine Temperatur von 100 bis etwa 180 °C. Für den Erhalt der erfindungsgemäß hergestellten, kristallinen Metallsilikate ist eine Reaktionszeit von mindestens 5 - 100 Tagen, bevorzugt 5 - 14 Tage, notwendig.

Als Syntheselösung dient eine Mischung, die eine Polyamin-, Metall- und eine Siliciumkomponente und gegebenenfalls eine Alkaliverbindung enthält. Dabei gelten für die Einsatzprodukte folgende Mengenbereiche:

| | breit | bevorzugt |
|---|---|---|
| $SiO_2$/Metalloxid | 5 - 3000 | 10 - 1000 |
| $H_2O/SiO_2$ | 5 - 200 | 10 - 100 |
| $OH^-/SiO_2$ | 0,001 - 1 | 0,01 - 0,8 |
| $M/SiO_2$ | 0 - 5 | 0 - 2,5 |
| $R/SiO_2$ | 0,001 - 5 | 0,005 - 3,0 |

In vorstehender Tabelle sind die Molverhältnisse angegeben. Dabei bedeuten M = Alkali- oder Erdalkalikomponente und R = Polyamin.

Die bei der Synthese angefallenen kristallinen Produkte wurden der Röntgenbeugung unterworfen; dabei wurden folgende Netzebenenabstände gefunden:

Tabelle 1

| Interplanarer Abstand d (Å) | rel. Intensität |
|---|---|
| 11.1 ± 0.3 | S |
| 10.0 ± 0.3 | S |
| 7.4 ± 0.2 | W |
| 7.1 ± 0.2 | W |
| 6.3 ± 0.2 | W |
| 6.04 ± 0.2 | W |
| 5.56 ± 0.1 | W |
| 5.01 ± 0.1 | W |
| 4.60 ± 0.08 | W |
| 4.25 ± 0.08 | W |
| 3.85 ± 0.07 | VS |
| 3.71 ± 0.05 | S |
| 3.04 ± 0.03 | W |
| 2.99 ± 0.02 | W |
| 2.94 ± 0.02 | W |

Hierbei bedeuten S = stark, VS = sehr stark und W = schwach.

Diese Werte wurden nach Standard-Techniken bestimmt. Dabei wurden ein Philips PW 1130 Generator mit Ni-gefilterter Cu-K$\alpha$ -Strahlung und ein Goniometer eingesetzt.

Bekanntermaßen können geringe Abweichungen in Lage und Intensität der Netzebenenabstände eintreten durch den Einsatz von anderen Kationen, Veränderungen im Silicium-Metall-Verhältnis sowie durch thermische Behandlung.

Zur Entfernung der organischen Base werden die erfindungsgemäß hergestellten kristallinen Metallsilikate in Gegenwart von Luft, Stickstoff, Ammoniak und/oder Wasserdampf bei 100 - 700 °C calciniert, bevorzugt ist eine Temperatur von 550 °C. Zur Erhöhung ihrer Aktivität können die Silikate mehrere Stunden bei Temperaturen bis zu 800 °C mit Wasserdampf behandelt werden.

Zur Verwendung als Katalysator sollten die erfindungsgemäß hergestellten kristallinen Metallsilikate in ionenausgetauschter Form eingesetzt werden. Dabei kann die Wasserstoffform durch Calcinieren der Ammoniumform, die wiederum durch Ionenaustausch aus der Natriumform hergestellt wurde, erhalten werden oder durch Behandlung mit verdünnter Säure. Ferner lassen sich die Kationen der erfindungsgemäß hergestellten kristallinen Metallsilikate gegen Metallionen der Gruppen II a, IIIa , IVa , Ib IIb , IVb und/oder VIII des Periodensystems in bekannter Weise austauschen. Kombinationen o.a. Metallionen können natürlich auch angewandt werden. Außerdem können die erfindungsgemäß hergestellten, kristallinen Metallsilikate mit Metallsalzlösungen getränkt werden oder die erfindungsgemäß hergestellten, kristallinen Metallsilikate können mit den entsprechenden Metallsalzen, -oxiden und/oder -hydroxiden innig vermischt werden.

Die erfindungsgemäß hergestellten, kristallinen Metallsilikate enthalten je nach Reaktionsbedingungen verschieden große Kristallite.

Es ist häufig wünschenswert, Katalysatoren mit anderen Materialien zu vermischen. Diese Materialien können aktiv oder inaktiv bezüglich ihrer katalytischen Eigenschaften sein. Daher können die erfindungsgemäß hergestellten, kristallinen Metallsilikate mit sowohl natürlichen oder synthetischen Zeolithen vermischt werden, als auch mit anderen Materialien, wie z.B. Cellulosederivaten, Tonen und/oder Metalloxiden. Letztere können entweder natürlich vorkommen oder aus gelatinierten Niederschlägen, Solen oder Gelen einschließlich Mischungen mit Metalloxiden bestehen.

Auch können diese Zuschlagstoffe in Kombinationen eingesetzt werden. Dabei kann das Grundmaterial in Form eines Kogels vorliegen. Auch können die Anteile der Zuschlagstoffe untereinander und zusammen mit den erfindungsgemäß hergestellten, kristallinen Metallsilikaten in weiten Grenzen variieren. Eingesetzt werden können diese Zusätze in einem Bereich von 1 - 99 Gew.-%, bevorzugt 5 - 80 Gew.-%.

Die erfindungsgemäß hergestellten, kristallinen Metallsilikate können vorteilhafterweise für zahlreiche Reaktionen eingesetzt werden, dazu gehören:

Überführung von z.B. Dimethylether und/oder Methanol oder anderen (niederen) Alkoholen oder Fischer-Tropsch-Syntheseprodukten in Kohlenwasserstoffe wie Olefine und Aromaten. Ferner lassen sich diese erfindungsgemäß hergestellten, kristallinen Metallsilikate verwenden für Alkylierungen, Disproportionierungen, Cracken, Hydrocracken, Isomerisierungen, Hydrierungen und Dehydrierungen.

Die folgenden Beispiele dienen der weiteren Veranschaulichung der Art der Erfindung und ihrer praktischen Durchführung.

Beispiel 1

Lösung A: 31.5 g $NaAlO_2$ (54 Gew.-% $Al_2O_3$, 41 Gew.-% $Na_2O$) +
9.3 g NaOH +
250 ml $H_2O$

wurden zusammengegeben und gründlich gemischt.

Lösung B: 1000 g Ludox 30 R$^+$ der Firma Dupont (30 Gew.-% $SiO_2$, 0,34 Gew.-% $Na_2O$)+
250 g Triethylentetramin +
750 g $H_2O$

Lösung A wurde dann in Lösung B gegeben und gründlich gemischt. Das dabei entstehende Gel wurde in einen Edelstahlautoklaven überführt und 8 Tage bei 175 °C gerührt. Es resultierte ein kristallines Produkt, das filtriert, gewaschen und anschließend bei 120 °C getrocknet wurde und dessen Röntgenbeugungsdiagramm in Tabelle 1 wiedergegeben ist. Zur Entfernung der organischen Base wurde das Produkt anschließend bei 550 °C calciniert, nach dem Erkalten wurde dreimal mit 10 Gew.-%iger $NH_4Cl$-Lösung bei 100 °C ionenausgetauscht und anschließend erneut bei 550 °C calciniert.

Beispiel 2

Zunächst wurde eine Lösung A bestehend aus 17 g $NaAlO_2$ (54 Gew.-% $Al_2O_3$, 41 Gew.-% $Na_2O$), 250 g $H_2O$ und 26 g NaOH hergestellt. Diese Mischung wurde dann zu 750 g Ludox 40 (40 Gew.-% $SiO_2$, 0.43 Gew.-% $Na_2O$) gegeben und 250 g Triethylentetramin in 750 g $H_2O$ und 524 g NaCl zugesetzt. Nach guter Durchmischung wurde das Gel 13 Tage bei 100 °C in einem Teflonbehälter gerührt. Es resultierte ein kristallines Produkt dessen Röntgenbeugungsdiagramm den in Tabelle 1 wiedergegebenen Werten entsprach. Die Aufarbeitung erfolgte wie in Beispiel 1 beschrieben.

Beispiel 3

Eine Aufschlämmung von 8.84 g $NaAlO_2$ (54 Gew.-% $Al_2O_3$, 41 Gew.-% $Na_2O$) in 269 g $H_2O$ wurde in 1136 g Wasserglas HK 30 (22.0 Gew.-% $SiO_2$, 7.38 Gew.-% NaOH) gegeben und gründlich gemischt. Weiterhin wurden 42 g Diethylentriamin in 541 g $H_2O$, 87,7 g $H_2SO_4$ (95,7 Gew.-%) in 269 g $H_2O$ und 393 g $Na_2SO_4$ in 388 g $H_2O$ eingerührt. Das dabei entstandene Gel wurde 5 Tage bei 175 °C in einem Autoklaven gerührt. Das angefallene kristalline Produkt zeigte das gleiche Röntgenbeugungsdiagramm, wie es in Tabelle 1 angegeben ist. Die Aufarbeitung erfolgte wie unter Beispiel 1 angegeben.

Beispiel 4

17,68 g $NaAlO_2$ (54 Gew.-% $Al_2O_3$, 41 Gew.-% $Na_2O$) wurden in 538 g $H_2O$ aufgeschlämmt und zu 2272 g Wasserglas HK 30 (22.0 Gew.-% $SiO_2$, 5.92 Gew.-% NaOH) in 1612 g $H_2O$ gegeben. Weiterhin wurden 64.2 g NaOH, 84.0 g Diethylentriamin in 1082 g $H_2O$ sowie 175,4 g $H_2SO_4$ (95.7 Gew.-%) in 538 g $H_2O$ und

648 g NaCl in 776 g $H_2O$ zugesetzt. Das Gel wurde in einem Teflonbehälter 13 Tage bei 100 °C geführt. Das dabei entstandene, kristalline Produkt zeigt ein Röntgenbeugungsdiagramm, wie es in Tabelle 1 angegeben ist. Die weitere Aufarbeitung erfolgte wie in Beispiel 1 beschrieben.

Das getrocknete Produkt hatte folgende Analysenwerte:
2,21 Gew.-% $Na_2O$, 74,84 Gew.-% $SiO_2$, 2,84 Gew.-% $Al_2O_3$, 3,5 Gew.-% N.

## Beispiel 5

13.26 g $NaAlO_2$ (54 Gew.-% $Al_2O_3$, 41 Gew.-% $Na_2O$) wurden in 404 g $H_2O$ aufgeschlämmt und zu einer Lösung von 1718 g Wasserglas HK 30 (27.8 Gew.-% $SiO_2$, 7.73 Gew.-% NaOH) in 1204 g $H_2O$ gegeben. Weiterhin wurden 383.5 g Diethylentriamin in 812 g $H_2O$, 67.65 g $H_2SO_4$ (95.7 Gew.-%) in 404 g $H_2O$ sowie 22.3 g NaCl in 446 g $H_2O$ zugesetzt. Das dabei entstandene Gel wurde 30 Tage bei 100 °C in einem Teflonbehälter gerührt. Das dabei angefallene kristalline Produkt zeigte dasselbe Röntgenbeugungsdiagramm wie das in Tabelle 1 angegebene. Die Aufarbeitung erfolgte wie in Beispiel 1 beschrieben.

## Beispiel 6

In eine Lösung, bestehend aus 500 g Diethylentriamin in 1.500 g $H_2O$, die bei 60 °C gehalten wurde, wurden 160 g Aerosil 380 (R) und 12,95 g frisch gefälltes $Al(OH)_3$ eingerührt. Die Mischung wurde in einem Autoklaven 5 Tage bei 180 °C gerührt. Es entstand ein kristallines Produkt, das filtriert, gewaschen und anschließend bei 120 °C getrocknet

wurde, und dessen Röntgenbeugungsdiagramm in Tabelle 1 wiedergegeben ist. Zur Entfernung der organischen Base wurde das Produkt anschließend bei 550 °C calciniert.

Beispiel 7

In einer Lösung von 375,6 g Diethylentriamin in 1123 g Wasser wurden bei 60 °C 9,9 g frisch gefälltes Eisen(II)-hydroxid und 120 g Aerosil 380 (pyrogene Kieselsäure) dispergiert. Anschließend wurde die Mischung 10 Tage bei 170 °C in einem Autoklaven gerührt. Das entstandene, kristalline Produkt wurde abfiltriert, gewaschen und darauf bei 120 °C getrocknet. Sein Röntgenbeugungsdiagramm stimmte mit den Daten der Tabelle 1 überein. Anschließend wurde das Produkt zur Entfernung der organischen Base bei 550 °C calciniert. Zur Erhöhung seiner Aktivität wurde das Produkt 16 Stunden bei 540 °C mit Wasserdampf behandelt.

Beispiel 8

Folgende Lösungen wurden in der angegebenen Reihenfolge gründlich miteinander gemischt:

6,2 g NaOH in 320 g Wasser
473,9 g Wasserglas HK 30 (21,1 Gew.-% $SiO_2$; 7,16 Gew.-% NaOH)
15,2 g $Fe(NO_3)_3 \cdot 9\ H_2O$ in 108 g Wasser
16,9 g Diethylentriamin in 220 g Wasser
30,6 g $H_2SO_4$ (95,75 Gew.-% in 108 g Wasser)
156 g $Na_2SO_4$ in 157 g Wasser

Die Mischung wurde 10 Tage bei 170 °C in einem Autoklaven gerührt. Das erhaltene Röntgenbeugungsdiagramm entsprach den Werten der Tabelle 1. Die Aufarbeitung erfolgte analog zu Beispiel 1.

Beispiel 9 - Anwendung

Der in Beispiel 5 beschriebene Kontakt wurde in seiner H-Form zusammen mit Aluminiumoxid in Extrudate von 4 mm Durchmesser und einer durchschnittlichen Länge von 6,8 mm geformt. Nach Überleiten von Methanol bei 375 °C und LHSV = 1 unter Normaldruck resultierten zwei Phasen, von denen die obere, organische Phase 20,35 Gew.-% der angefallenen Gesamtmenge ausmachte. Die obere Phase bestand zu 78,32 Gew.-% aus Aromaten. Die untere, wäßrige Phase, machte 57,47 Gew.-% der angefallenen Gesamtmenge aus und enthielt neben Wasser noch 1,23 Gew.-% nicht umgesetztes Methanol. 21,36 Gew.-% der angefallenen Gesamtmenge bestanden aus Gasen, deren Hauptkomponenten aus folgenden Verbindungen bestanden: $H_2$, $CH_4$, $C_2H_6$, $C_3H_8$, i-$C_4H_{10}$, n-$C_4H_{10}$, i-$C_5H_{12}$, $C_2H_4$ und CO.

Beispiel 10 - Anwendung

Das Beispiel 9 wurde wiederholt, jedoch wurde die Reaktion bei 20 bar durchgeführt. Im Unterschied zum vorherigen Beispiel fiel dabei 23,57 Gew.-% an oberer, organischer Phase an, die zu 85,67 Gew.-% aus Aromaten bestand. Dabei änderte sich auch das Produktenspektrum der Aromaten zu stärker alkylierten Produkten hin. Außerdem fielen entsprechend weniger Olefine und Aliphaten an.

Patentansprüche:

1. Verfahren zur Herstellung von kristallinen Metallsilikaten, das darin besteht, daß man eine wäßrige, alkalische Lösung, die einer Metallkomponente in Form von Oxiden, Hydroxiden, Salzen, organischen Metall-Verbindungen, eine Siliciumkomponente in Form von Oxiden, Gelen, Siliciumhydrosolen, Wasserglas, Kieselsäuren und organischen Siliciumverbindungen und gegebenenfalls Alkaliverbindungen enthält, unter Rühren bei erhöhter Temperatur in Gegenwart von Schablonenverbindungen umsetzt, anschließend trocknet und calciniert,
dadurch gekennzeichnet, daß
als Schablonenverbindungen lineare und verzweigte Polyamine mit mehr als 2 N-Atomen der allgemeinen Formel

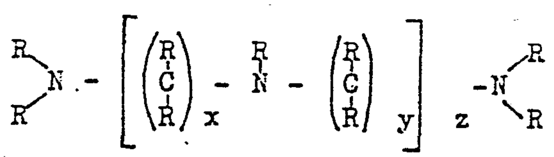

worin die Reste R in beliebiger Weise aus der Gruppe Wasserstoff, $C_1 - C_{10}$ -Alkyl und -Cycloalkyl kombiniert werden können und x, y und z Zahlen von 1 - 10 bedeuten,

verwendet werden und diese mit der Metall-Silikat-Ansatzlösung innig vermischt, 5 - 100 Tage, insbesonder 5 - 14 Tage, bei 80 - 220 °C, insbesondere 100 bis 180 °C, gerührt, der abgegebene Feststoff getrocknet und bei Temperaturen von 500 - 600 °C calciniert, anschließend gegebenenfalls einem Ionenaustausch unterworfen und nochmals calciniert wird.

2. Verfahren gemäß Anspruch 1,
dadurch gekennzeichnet, daß
man als Metall Aluminium einsetzt.

3. Verfahren gemäß Anspruch 1, dadurch gekennzeichnet, daß man als Metall Eisen einsetzt.

4. Verfahren gemäß Anspruch 1, dadurch gekennzeichnet, daß man die Metallsilikate zur Aktivierung bis zu 20 Stunden mit Wasserdampf bei Temperaturen bis zu 800 °C behandelt.

5. Verwendung der gemäß Anspruch 1 hergestellten kristallinen Metallsilikate als Katalysatoren für die Umwandlung von gegebenenfalls Sauerstoff enthaltenden organischen Verbindungen in Kohlenwasserstoffe.

0072054

Europäisches Patentamt

# EUROPÄISCHER RECHERCHENBERICHT

Nummer der Anmeldung
EP 82 20 0860.3

| EINSCHLÄGIGE DOKUMENTE | | | KLASSIFIKATION DER ANMELDUNG (Int. Cl.3) |
|---|---|---|---|
| Kategorie | Kennzeichnung des Dokuments mit Angabe, soweit erforderlich, der maßgeblichen Teile | betrifft Anspruch | |
| P,X | EP- A2 - 0 034 727 (BASF)<br>* Beispiele 1, 2 *<br>-- | 1-3 | C 01 B 33/28<br>B 01 J 29/28 |
| D,Y | EP - A1 - 0 009 976 (BP)<br>* Anspruch 1 *<br>-- | 1 | |
| D,Y | DE - A - 1 767 235 (MOBIL OIL)<br>* Ansprüche 7 bis 11 *<br>-- | 1 | |
| D,A | DE - A1 - 2 831 611 (BASF)<br>-- | | RECHERCHIERTE SACHGEBIETE (Int. Cl.3) |
| A | GB - A - 2 024 790 (SNAMPROGETTI)<br>& DE - A - 2 924 915<br>-- | | B 01 J 29/00<br>C 01 B 33/00 |
| A | DE - B2 - 2 117 117 (MOBIL OIL)<br>---- | | |

KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 24-09-1982 | KESTEN |

EPA form 1503.1 06.78